Europäisches Patentamt

European Patent Office

Office européen des brevets

(11) Publication number: **0 115 707**
**A1**

## (12) EUROPEAN PATENT APPLICATION

(21) Application number: **83308017.9**

(22) Date of filing: **29.12.83**

(51) Int. Cl.³: **F 24 H 3/04,** B 60 H 1/22, F 23 C 11/00, F 23 C 6/04

(30) Priority: **05.01.83 GB 8300142**
**28.09.83 GB 8325966**

(43) Date of publication of application: **15.08.84**
**Bulletin 84/33**

(84) Designated Contracting States: **BE DE FR SE**

(71) Applicant: **Ross James Heaters Limited, Longwood Lane, Walsall (GB)**

(72) Inventor: **Masters, Keith William Tidman, c/o Ross James Heaters Limited Longwood Lane, Walsall (GB)**
Inventor: **Restall, George, c/o Ross James Heaters Limited Longwood Lane, Walsall (GB)**
Inventor: **Clifft, Charles, c/o Ross James Heaters Limited Longwood Lane, Walsall (GB)**

(74) Representative: **MacMaster, Alan Jeffrey et al, Swindell & Pearson 44 Friar Gate, Derby DE1 1DA (GB)**

(54) Catalytic combustion space heating method and apparatus.

(57) Space heating apparatus comprises a housing (10), a fan (16) for propelling air to be heated through the housing, means (38, 39) for combusting a fuel/air mixture to a sufficient degree to produce heated air and non-toxic combustion products, and an outlet (14) through which the heated air and the combustion products are discharged to the space to be heated. The apparatus preferably incorporates a two-stage combustion chamber (20) comprising means (38) for igniting the fuel and air mixture and a catalytic material (39) disposed downstream of the ignition means in which any remaining combustible products are subjected to catalytic action to produce the non-toxic output.

EP 0 115 707 A1

0115707

Catalytic Heating Method and Apparatus

The invention relates to forced-draught catalytic heating especially, but not exclusively, suitable for use in heating the driver/passenger compartment of a vehicle, boat or caravan.

Known heaters for vehicle cabs comprise a heater, powered by diesel fuel which has an air-circulation system wherein air from outside or inside the cab is heated and discharged into the cab, a flue being provided to vent noxious combustion products and unburnt or incompletely burnt fuel to atmosphere. This is wasteful of heat which has been transferred to these waste gases. This known type of heater is also very noisy and, because the length of the flue pipe is limited to about two metres, the heaters are inflexible as to the position of their installation on the vehicle.

According to one aspect of the present invention there is a provided space heating apparatus comprising a housing, means for propelling air to be heated through the housing, means for introducing alkane fuel to said housing and for mixing same with said air, means for combusting the fuel/air mixture to a sufficient degree to produce heated air and non-toxic combustion products (as herein defined), and an outlet through which the heated air and the combustion products are discharged to the space to be heated.

The term "non-toxic" is used herein to refer to combustion products in which toxic contaminants are present in an amount of less than 80 parts per million. Desirably, the contaminant level in the non-toxic combustion products is less than 10 parts per million, preferably of the order of two or three parts per million. The combustion products are substantially all carbon dioxide and water vapour.

Preferably, said means for combusting said fuel/air mixture includes a catalytic material through which the mixture passes as it is propelled through said housing.

Advantageously the means for combusting the fuel/air mixture is a two-stage combustion chamber comprising means for igniting said mixture after mixing of the fuel and air and a catalytic material disposed downstream of said ignition means and through which the heated air and the products of combustion from the ignition stage are propelled and in which any remaining combustible products are subjected to catalytic action to produce said non-toxic output.

The fuel is preferably propane or butane derived from a liquid reservoir in a pressurised container connected to the housing.

Preferably said means for propelling air through the housing comprises a fan or blower. The housing may include an annular chamber surrounding and by-passing the region of the housing in which combustion takes place said annular chamber communicating with said fan or blower, and with said outlet. In this way air passing through

- 3 -

0115707

the annular chamber cools the outer casing of the housing and mixes with the heated air leaving the combustion region so that the air leaving the housing is heated to a comfortable temperature. This by-passed air also acts to reduce the carbon dioxide content in the air leaving the housing to an acceptable level, for example below ½%.

The means for combusting the fuel/air mixture may incorporate mixing means to ensure adequate mixing of air and fuel prior to combustion. The mixing means may include a grid, mesh or manifold disposed downstream of a venturi device, itself disposed upstream of the ignition means.

The catalyst material preferably comprises a platinum based salt supported on a corrugated spirally wound stainless steel support.

The means for propelling air may comprise an induction fan operable to draw air into the housing and a second fan situated in a secondary housing connecting with the combustion chamber and operable to draw part of the air drawn in by said induction fan into said secondary housing and propel it into the combustion chamber. Both fans may advantageously be mounted on a common motor-driven shaft.

Preferably control means is provided for operating the fan or blower at slow speed at start up of operation of the apparatus so that the fuel/air mixture is initially alkane-rich. This enables the catalyst material to attain its working temperature range quickly, following which said control means is arranged to speed up the fan blower to its normal working speed.

In an alternative arrangement the housing comprises first and second chambers separated by a porous layer of catalytic material, the first chamber having an inlet for fuel and the second chamber having an inlet and an outlet for air to be heated propelled therethrough, said catalytic material being so constructed that on passage of fuel therethrough the resistance of the material to such passage ensures oxidation of the fuel to a sufficient degree to produce non-toxic combustion products as herein defined.

According to a further aspect of the invention there is provided a method of space heating comprising propelling a mixture of fuel and air through a combustion housing, effecting combustion of the fuel/air mixture to a sufficient degree to produce heated air and non-toxic combustion products (as herein defined) and discharging the heated air and the combustion products from the combustion housing into a space to be heated. Preferably the air to be heated is at least partly derived from within the space to be heated. Where such air incorporates uncombusted hydrocarbon elements these will be subjected to combustion in the heater and released as non-toxic combustion products (as herein defined). In this way the invention serves an air purifying as well as an air heating function.

Preferably the air/fuel mixture is subjected to a two stage combustion process comprising an ignition stage followed by a catalytic stage.

Embodiments of the invention will now be described, by way of example only, and with reference to the accompanying drawings, in which:-

Fig 1    is an axial part cross-sectional view showing one form of apparatus according to the invention:

Fig 2    is an axial part cross-sectional view showing part of a variant of the apparatus shown in Fig 1:

Fig 3    is a schematic diagram of an electrical system for use with the apparatus of Fig 1  or Fig 2:  and

Fig    is an axial part cross-sectional view of an alternative form of heater.

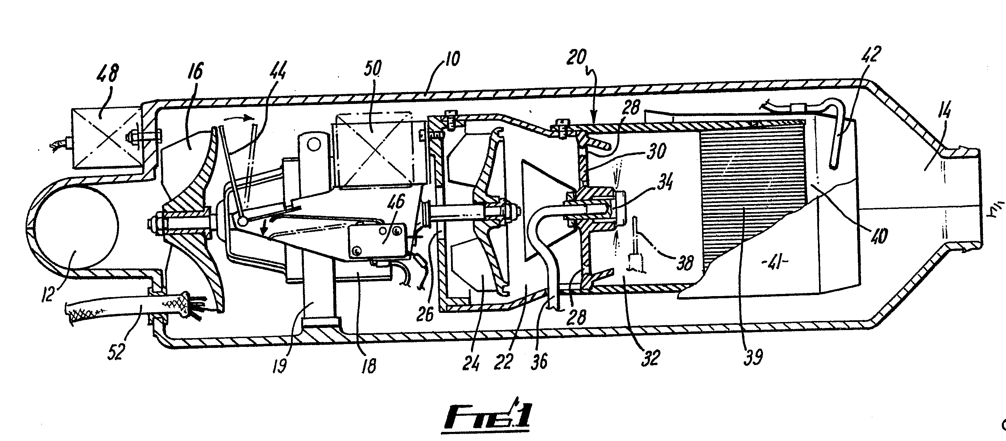

The apparatus shown in Fig 1. comprises an elongated housing 10 having an air inlet 12 at one end and an air outlet 14 at the opposite end.  An induction fan 16 driven by a motor 18 draws air in through the inlet 12 and propels it through the housing 10.  The motor is supported in a mounting 19.  Part of the inducted air flows as cooling air adjacent the wall of the housing 10 in a substantially annular passage around a heating assembly indicated generally at  20, to keep the housing at a temperature bearable to the touch.

The heating assembly 20 comprises a chamber 22 into which air is drawn by a second fan 24, driven by the motor 18. The air enters the chamber 22 through an inlet port 26, through which passes the spindle of the motor 18, on which the fan is mounted.  The fan 24 propels the air through apertures 28 in a wall 30 of a combustion chamber 32.
A gas jet 34 supplied by a pipe 36 from an external
"bottle" gas supply is mounted centrally of the wall 30
and a spark igniter 38 is provided to ignite the gas at
start up. At the other or exit end of the combustion chamber
there is provided a purification catalyst 39 through which all
gases leaving the combustion chamber pass into an outlet
region 40 where they are mixed with the cooling air which
has by-passed the heating assembly 20 before passing to
the outlet 14. A cowl 41 divides the cooling air into two
streams, one of which mixes with the air leaving the combustion
chamber before the other. The temperature at the downstream
end of the catalyst is sensed by a thermocouple 42 the function
of which will be described hereafter.

The induction fan 16 has mounted near to it an "L"
shaped pivotal flap 44 having the short arm of the "L"
in abutment with an actuating arm of a microswitch 46. The
long arm of the "L" acts as a vane such that when the fan
is on, the air flow forces the long arm backwards about its
pivot so activating the microswitch 46 against the action of
a light spring (not shown) within the body of the switch.

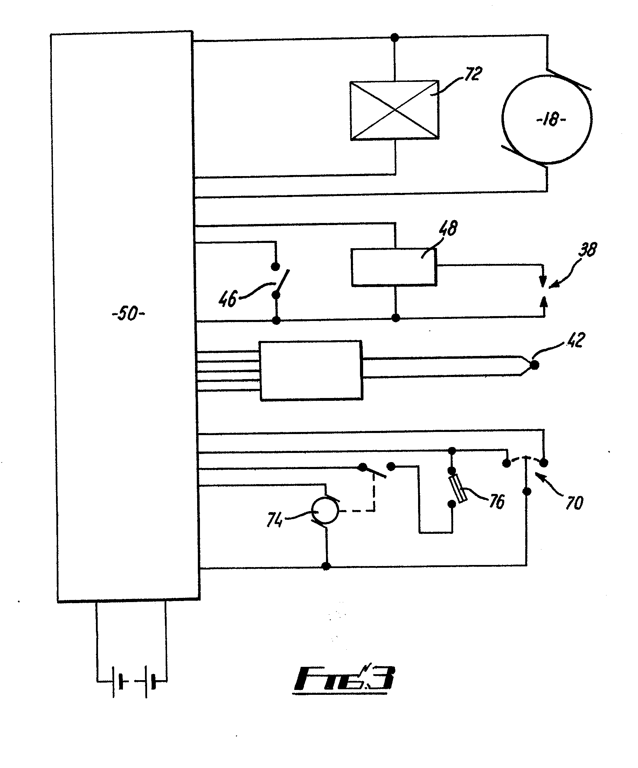

A spark generator 48 is mounted on the outside of the
housing 10 and supplies the spark igniter 38 through
an insulated cable (not shown). An electronic control
box 50 is provided within the casing, and constitutes a
central processing unit (CPU) the functions of which will be
described with reference to Fig 3. Power supply cables to the
CPU are partly shown at 52.

Any suitable catalytic material may be employed but the catalyst preferably comprises a platinum based salt deposited on a stainless steel support which is corrugated and spirally wound to form a cylinder having a plurality of through passages and presenting a substantial surface area for contact with the gases passing therethrough. A suitable product is marketed by Johnson Matthey Limited under Ref No: EY24/20WD/40.

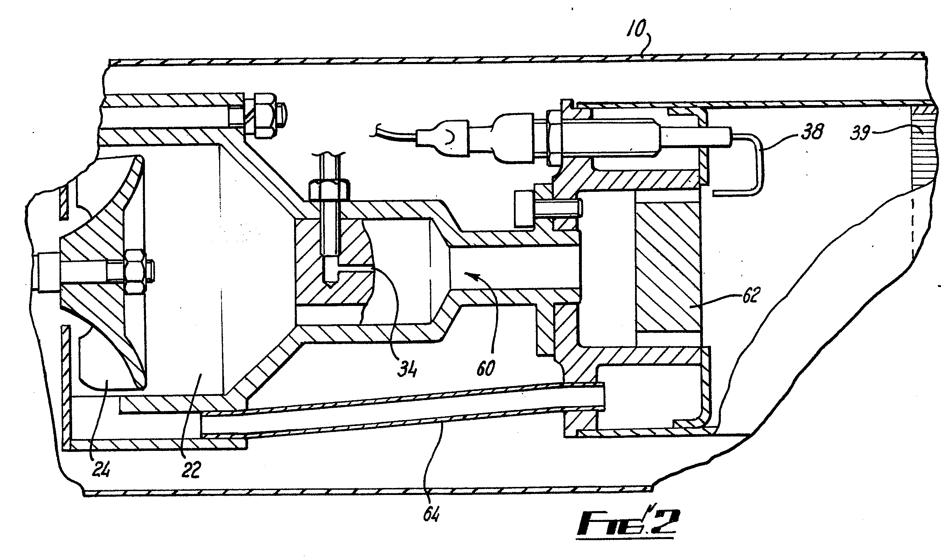

The apparatus shown in Fig 2 is similar to that shown in Fig 1 in most respects and equivalent parts bear corresponding reference numerals. The principal difference resides in the fact that from the chamber 22 the air is fed into a venturi 60 of which the gas jet 34 forms a part. The gas and air mix intimately in the venturi, before flowing to a manifold 62 at which the gas is ignited by the spark igniter 38. There is also provision for secondary air from the chamber 22 to by-pass the venturi to mix with the gas/air mixture in the combustion chamber 32 by way of a pipe 64. This construction ensures a better mixing of the gas and air but is less compact than the apparatus shown in Fig 1.

In operation of the arrangements shown in Figs 1 and 2, air is drawn into the housing by the induction fan 16 from a fresh air supply and/or from within the space to be heated (i.e. recirculated air), some of the air passing through the annular space adjacent the wall of the housing as cooling air and some being drawn into the chamber 22 by the second fan 24. In the apparatus of Fig 1 air then passes into the combustion chamber where it mixes with alkane fuel issuing from the jet 34. The fuel is preferably propane or butane derived from a liquid reservoir in a pressurised container connected to the housing. Primary combustion occurs in the combustion chamber, the combustion products being propelled towards the catalyst 39 where any unburnt fuel is combusted by catalytic oxidation. The hot combustion products pass through the catalyst and mix with the cool air from the annular chamber adjacent the wall of the housing before leaving the housing via the outlet 14. In the case of the apparatus of Fig 2 the operation is similar but the venturi 60 ensures intimate mixing of fuel and air before combustion occurs in the combustion chamber 32.

In both cases the heated air and combustion products are vented into the space to be heated, the combined ignition and catalytic combustion ensuring that the combustion products are non-toxic, that is the level of any contaminants in the form of noxious unburnt fuel or combustion products is less than 80 parts per million, the combustion products being substantially carbon dioxide and water vapour. The level of contaminants remains substantially constant over the life of the catalyst (greater than 10,000 hours) and is preferably less than ten parts per million and desirably of the order of two or three parts per million.

A particular advantage of the apparatus derives from the ability to operate wholly or partly on air re-circulated from the space to be heated since each time the air is subjected to the combustion cycle and the catalytic action the level of contaminants in the air is further reduced.

Thus, the apparatus acts not only as an air heater but also as an air purifier. The air supply is preferably drawn both from the space to be heated and from outside but the external supply may be ommitted provided the space to be heated is adequately ventilated.

A number of safety devices controlled by the CPU 50 are incorporated and will now be described with reference to Fig. 3. A main control switch 70 is provided having "OFF", "HEAT" and "FAN" positions. At start up the switch 20 is turned to the "HEAT" position which causes the CPU to deliver half the normal supply of voltage (i.e. 6v) to the motor 18. At the same time the spark generator 48 is energised to supply a spark to the igniter 38 and a solenoid gas supply valve 72 is opened to allow alkane fuel to reach the jet 34. Since the motor 18 is operating at reduced speed the air/fuel mixture in the combustion chamber is fuel rich which facilitates ignition by the spark generator.

The thermocouple 42 then senses the rise in temperature caused by the output of heated air and when this rise reaches a preset minimum (for example 40°C) the CPU provides full voltage to the motor 18 and the spark generator 48 is switched off. After a further delay of a few seconds the CPU senses whether the microswitch 46 is operating satisfactorily (i.e. that the flap 44 has activated the switch) and thus that the air flow is not restricted for any reason, for example due to inadequate supply voltage to the motor causing the air flow generated by the induction fan 16 to be insufficient. If all is not in order the CPU shuts down the solenoid gas valve 72 so cutting off the fuel supply. A low voltage cut off (not shown) is also provided in the CPU 50 to close the solenoid valve 72 if the supply voltage falls below a preset minimum (for example 10.5V).

Input voltage regulating means is preferably provided to ensure that a voltage approximately equal to the normal working voltage of the motor 18 is supplied to the apparatus even if the input voltage to the regulating means is in excess of the normal working voltage.

If, at start up or subsequently, the temperature rise or steady temperature sensed by the thermocouple 42 is below the minimum required, the CPU shuts off the solenoid valve 72 after a preset delay of, say, 2 minutes regulated by a timer 74. Once the heater is in operation the heat output is controlled by a thermostat 76 to a limit preset in the CPU. Should the thermocouple 42 sense an overheat temperature above a preset maximum (for example 810°C) the CPU acts to close off the solenoid valve 72. By providing that this preset temperature is below the flame temperature of the gas/air mixture, the development of flames beyond the catalyst 39 is prevented.

0115707

If the heater is switched off by the main switch, by the thermostat or by operation of one of the safety devices, the supply to the motor is maintained to cool the apparatus until a predetermined temperature (for example 30°C) set in the CPU, has been reached, whereupon the motor 18 is switched off. The CPU prevents restarting of the heater after shut off unless the main switch 70 is first set to the "OFF" position.

Tests carried out on heating apparatus constructed in accordance with Figs. 1 to 3 have produced extremely low levels of toxicity in the heated air and combustion r products discharged into the space to be heated. Levels well below 80 parts per million of toxic contaminants and generally levels below 10 parts per million and frequently as low as 2 to 3 parts per million have been recorded. This extremely low level of contaminant renders the heater extremely safe and is believed.to be due to the two stage combustion process employed, the second catalytic or "after-burn" stage oxidising almost completely the unburnt combustable products remaining after the primary ignition stage. Indeed as mentioned previously the effectiveness of the apparatus in removing contaminant products is such that it acts as an air purifier in situations where re-circulated air is employed which initially contains a higher level of contaminants, since the efficiency of combustion within the apparatus produces a non-toxic output even when employed to heat a toxic air supply.

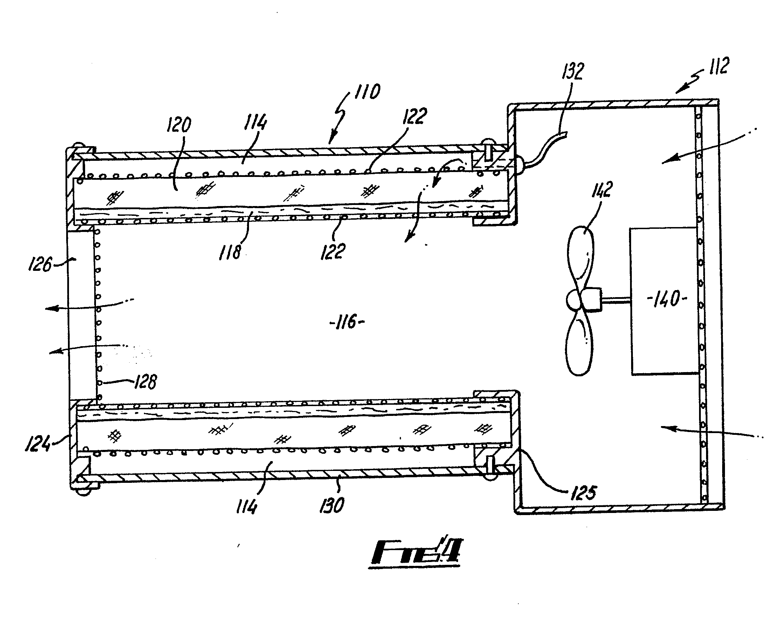

The alternative form of heater shown in Fig 4. comprises an annular outer or first chamber 114 and a cylindrical inner or second chamber 116 separated by a layer of catalytic material 118 and a packing layer of refractory wool 120. These layers are sandwiched between a pair of cylindrical mesh supports 122, clamped between an end plate 124 and a part 125 of the fan housing 112. The end plate 124 has an outlet aperture 126 for heated air and is provided with a steel mesh safety grille 128. The end plate 124 and the part 125 of the fan housing also support a cylindrical casing 130 defining the outer wall of the outer chamber 114.

An inlet line 132 is connected to the chamber 114 and in use a gaseous fuel is supplied to the chamber, in amounts governed by a control valve (not shown). An electric heating element (not shown) is provided between the refractory wool layer 120 and the catalytic material layer 1.8, the heating element being controlled by a switch (not shown) and being used on start-up to heat the gas to a working temperature, generally in excess of 150°C, above which catalytic oxidation of the gas takes place. Gas is fed to the apparatus by a supply line 138 which is preferably armoured or toughened to lessen the likelihood of puncturing. The fan housing 112 contains an electrically driven fan motor 140 and a fan 142.

In use of the apparatus, gas supplied via the line 132 enters the annular outer chamber 114 and passes through the outer support 122 and the refractory wool 120 to the layer of catalytic material where oxidation takes place converting the gas with generation of heat to carbon dioxide and water vapour, which pass through the inner support 122 into the cylindrical inner chamber 116 where they mix with and heat the air forced therethrough by the fan 142. This air is preferably drawn into the apparatus both from the space to be heated and from outside and both of the inlets are preferably filtered to prevent entry of dust into the catalytic cell. Some heating of the air in the chamber 116 also takes place by conduction and radiation. Heated air from the apparatus may be ducted into the cab of a truck, for example, the apparatus being supplied with fuel from a pressurised gas bottle carried on the vehicle.

In order to effect sufficiently complete combustion to produce non-toxic combustion products the catalytic material must be arranged to give the correct degree of resistance to passage of the fuel therethrough. If the catalytic material is tightly compressed there will be insufficient oxidation at low fuel flow rates. Conversely, if the catalyst is too loosely packed too much fuel will pass through the catalyst unoxidised.

The necessary degree of compression of the catalytic material can be determined by trial and error, preferably starting with high compression and reducing the compression until satisfactory combustion is obtained at the lowest designed flow rate.

Because the heaters described above are provided with a forced-draught air supply they may be mounted at a distance from the space to be heated, for example several metres from the cab of a lorry, if desired. However, due to their relatively compact construction they can readily be accommodated in most vehicle cabs, boats or caravans. The fuel supply is preferably mounted remote from the space to be heated, suitable precautions being taken to protect the supply line to the heater.

Various modifications may be made without departing from the invention. For example, the nature and construction of the catalytic material may be altered and different combinations of safety devices may be employed. The voltage and temperature limits referred to may be altered and different alkane fuels employed. In a modification of the arrangement shown in Fig 4 of the drawings, the fuel may be supplied to the inner surface and the air to be heated to the outer surface of the catalyst. Moreover, while primarily designed for use in lorry cabs, boats or caravans the heater may be employed in a variety of other locations.

# 0115707

CLAIMS

1. Space heating apparatus characterised by a housing (10), means (16) for propelling air to be heated through the housing, means (34) for introducing alkane fuel to said housing and for mixing same with said air, means (38,39) for combusting the fuel/air mixture to a sufficient degree to produce heated air and non-toxic combustion products (as herein defined), and an outlet (14) through which the heated air and the combustion products are discharged to the space to be heated.

2. Apparatus according to claim 1 characterised in that said means for combusting said fuel/air mixture includes a catalytic material (39) through which the mixture passes as it is propelled through said housing (10).

3. Apparatus according to claim 2 characterised in that the means for combusting the fuel/air mixture is a two-stage combustion chamber (20) comprising means (38) for igniting said mixture after mixing of the fuel and air and a catalytic material (39) disposed downstream of said ignition means and through which the heated air and the products of combustion from the ignition stage are propelled and in which any remaining combustible products are subjected to catalytic action to produce said non-toxic output.

4. Apparatus according to claim 2 or 3 characterised in that said catalytic material (39) comprises a platinum based salt supported on a stainless steel support.

5. Apparatus according to any preceding claim characterised in that said means for propelling air through the housing comprises a

0115707

fan or blower (16).

6. Apparatus according to claim 5 characterised in that said housing (10) includes an annular chamber surrounding and by-passing the region of the housing in which combustion takes place, said annular chamber communicating with said fan or blower (16) and with said outlet (14).

7. Apparatus according to claim 5 or 6 characterised in that said means for propelling air comprises an induction fan (16) operable to draw air into the housing (10) and a second fan (24) situated in a secondary housing (22) connecting with the combustion chamber (32)·and operable to draw part of the air drawn in by said induction fan into said secondary housing and propel·it into the combustion chamber.

8. Apparatus according to claim 7 characterised in that both said fans are mounted on a common shaft adapted to be driven by a single electric motor (18).

9. Apparatus according to any preceding claim characterised by mixing means (34,60,62) operable to mix air and fuel prior to combustion.

10. Apparatus according to claim 9 characterised in that said mixing means comprises a throttling device (60) and a manifold (62) arranged upstream of the combustion chamber (32).

11. Apparatus according to claim 9 or 10 characterised by by-pass means (64) extending from said fan or blower (16) to the combustion chamber (32).

12. Apparatus according to any preceding claim characterised by control means (50) operable to run the fan or blower (16) at a reduced speed at start up of operation of the apparatus in order that the fuel/air mixture is initially alkane-rich, the control means incorporating sensing means (42) operatively associated with said catalyst and operable to increase the speed of the fan or blower to its normal working speed in response to the catalyst reaching a predetermined working temperature.

13. Apparatus according to any preceding claim characterised by cooling control means (50) operable to maintain the supply of power to the means (16) for propelling air following shut down of combustion until the apparatus has cooled to a predetermined temperature.

14. Apparatus according to any preceding claim characterised by air flow detection means (44) operable to shut off the supply of alkane fuel should the flow of air through the apparatus be inadequate.

15. A method of space heating characterised by propelling a mixture of fuel and air through a combustion housing (10), effecting combustion of the fuel/air mixture to a sufficient degree to produce heated air and non-toxic combustion products (as herein defined) and discharging the heated air and combustion products from the combustion housing (at 14) into a space to be heated.

16. A method according to claim 15 characterised in that the air/fuel mixture is subjected to a two-stage combustion process comprising an ignition stage followed by a catalytic stage.

17. A method according to claim 15 or 16 characterised in that the air to be heated is derived at least partly from the space to be heated, the apparatus acting to purify the air by combusting unburnt hydrocarbons already present therein.

18. A method according to claim 16 or 17 characterised in that the contaminant level in the non-toxic combustion products is less than 10 parts per million.

19. A method according to claim 16 or 17 characterised in that the contaminant level in the non-toxic combustion products is of the order of 2 - 3 parts per million.

0115707

FIG. 1

0115707

Fig 2

Fig. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CH-A- 312 089 (DURANDEAUX, MOREL) <br> * Whole document * | 1-5,12 ,14-16 | F 24 H 3/04 <br> B 60 H 1/22 <br> F 23 C 11/00 <br> F 23 C 6/04 |
| Y | | 6-8,13 | |
| Y | FR-A-1 298 747 (WEBASTO-WERK) <br> * Page 3, left-hand column; figure 1 * | 6-8,13 | |
| X | GB-A-1 460 312 (TOKYO GAS COMPANY LTD.) <br><br> * Page 3, line 47 - page 4, line 4; figures 1,2 * | 1-3,9, 11,15, 16 | |
| Y | | 4,5,18 | **TECHNICAL FIELDS SEARCHED (Int. Cl. ³)** |
| Y | GB-A-2 020 372 (JOHNSON, MATTHEY & CO.) <br> * Page 1, lines 80-95; page 3, lines 95-106; figure * | 4,5,18 | F 23 C <br> B 60 H <br> F 24 H |
| A | US-A-3 870 495 (DIXSON, HOFFMAN, WALLS) <br> * Column 7, lines 47-65; figures 24-26 * | 18,19 | |
|  | --- -/- | | |

The present search report has been drawn up for all claims

| Place of search | Date of completion of the search | Examiner |
|---|---|---|
| THE HAGUE | 22-03-1984 | JEST Y.G.A. |

BAD ORIGINAL

# EUROPEAN SEARCH REPORT

**European Patent Office**

0115707
Application number

EP 83 30 8017

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE-A-1 957 902  (CHEMETRON CORP.)<br>* Claim 1 * | 17 | |
| A | EP-A-0 009 523  (EXXON RESEARCH AND ENGINEERING) | | |
| A | US-A-3 883 637  (BENEDICT) | | |
| | | | **TECHNICAL FIELDS SEARCHED (Int. Cl. ³)** |

The present search report has been drawn up for all claims

| Place of search<br>THE HAGUE | Date of completion of the search<br>22-03-1984 | Examiner<br>JEST Y.G.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82